**Europäisches Patentamt**

(19) **European Patent Office**

**Office européen des brevets**

(11) Publication number : **0 377 611 B1**

# (12) EUROPEAN PATENT SPECIFICATION

(45) Date of publication of patent specification :
**03.06.92 Bulletin 92/23**

(51) Int. Cl.⁵ : **F16K 47/02**

(21) Application number : **88907323.5**

(22) Date of filing : **11.08.88**

(86) International application number :
**PCT/FI88/00126**

(87) International publication number :
**WO 89/01585 23.02.89 Gazette 89/05**

(54) **NOISE-REDUCED MIXING VALVE.**

(30) Priority : **18.08.87 FI 873575**

(43) Date of publication of application :
**18.07.90 Bulletin 90/29**

(45) Publication of the grant of the patent :
**03.06.92 Bulletin 92/23**

(84) Designated Contracting States :
**AT BE CH DE FR GB IT LI LU NL SE**

(56) References cited :
**DE-A- 3 318 888**
**SE-B- 441 773**
**SE-B- 443 860**
**US-A- 4 596 376**

(73) Proprietor : **ORAS OY**
**PL 40**
**SF-26101 Rauma (FI)**

(72) Inventor : **KOPPANEN, Jorma, Tapani**
**Puolukkatie 31**
**SF-26660 Rauma (FI)**

(74) Representative : **UEXKÜLL & STOLBERG**
**Patentanwälte**
**Beselerstrasse 4**
**W-2000 Hamburg 52 (DE)**

EP 0 377 611 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a noise-reduced mixing valve according to the preamble of Claim 1, as is known from document DE-A-3134280.

Mixing valves of this type are currently known as so-called lever taps, in which both the water temperature and the water flow are controlled by one single lever. A problem in these taps from the noise-reduction point of view is the uneven flow of the water and vortex formation around the adjustable apertures and in the flow space. In order to solve the problem of noise reduction it is known for various damping elements, e.g. mesh elements, to be arranged in the flow space. Similarly known is the formation in the bottom of the aperture of the ceramic disk or in a plastics piece attached to the disk of narrow parallel ribs or fins which reduce the turbulence of the flowing water. For example in DE-A-3134280 parallel fins formed in a plastics piece are fixed on top of a movable disk penetrated by an aperture. At the points of the inlet and outlet apertures said fins extend downwards approximately to the contact surface of the ceramic disks.

Even though a considerable improvement in respect of noise reduction is achieved by the aforesaid means, the bottom surface of the flow space, i.e. the upper surface of the fixed disk, nevertheless forms a surface which is approximately at a right angle to the inlet and outlet apertures and which causes local abrupt changes in the direction of flow and noise consequent upon this. Accordingly a purpose of the present invention is to provide an improvement such as further reduces noise in the flow space. In order to achieve this aim it is characteristic of the invention that the flow guide means comprises a flow guide piece positioned in close conjunction with the top surface of the fixed disk so that the part of said guide piece facing the mixing space forms a curved guide surface at the inner curve side of the water flow between the inlet apertures and the outlet aperture.

The purpose of the guide piece is thus to form a smooth guide surface on the "inside curve" side of the water flowing through the mixing space.

The guide piece may alternatively be attached either to the fixed or to the movable disk. In principle attachment to the fixed disk is mechanically easier, the piece can be attached to the outlet aperture of the fixed disk by a snap-on fastening. A weakness of attachment to the fixed disk is that the guide piece cannot extent quite as far as the input aperture of the disk since the closure edges of the movable disk must be free to move over the entire inlet aperture.

If the guide piece is attached to the movable disk it can extend up to the edges of the inlet apertures. Attachment can be made e.g. by projections on the sides of the guide piece extending along the side walls of the mixing space and engaging in corresponding recesses in the movable disk. In this embodiment care must be taken that the bottom surface of the guide piece moves so closely against the top surface of the fixed disk that water cannot flow between them.

The guide piece is most suitably made of plastics and it may have in a manner know per se fins extending in the direction of flow of the water in order to prevent vortex formation.

Other features and advantages of the invention are explained in greater detail in the following in the form of examples and with reference to the accompanying drawings, in which

Figure 1 shows one embodiment of the mixing valve of the invention as seen from the side and sectioned,

Figure 2 shows a cross-section through the line A-A of Figure 1 and on a slightly-enlarged scale,

Figure 3 shows the shape of the fixed ceramic disk and the guide piece as seen from above,

Figure 4 shows an embodiment slightly modified with respect to that of Figure 1 as seen from the side and sectioned,

Figure 5 shows a cross-section through the line A-A of Figure 4 on a slightly enlarged scale,

Figure 6 shows another embodiment of the mixing valve of the invention as seen from the side and sectioned,

Figure 7 shows a cross-section through the line A-A of Figure 7, and

Figure 8 shows a part of the construction according to Figure 7 as seen from above.

In the drawings the body of the mixing valve or tap is denoted by the reference number 1. Within said body is located the actual mixing part, including a fixed ceramic disk 2 in which there are inlet apertures 7 for hot and cold water and an outlet aperture 8 for the mixed water.

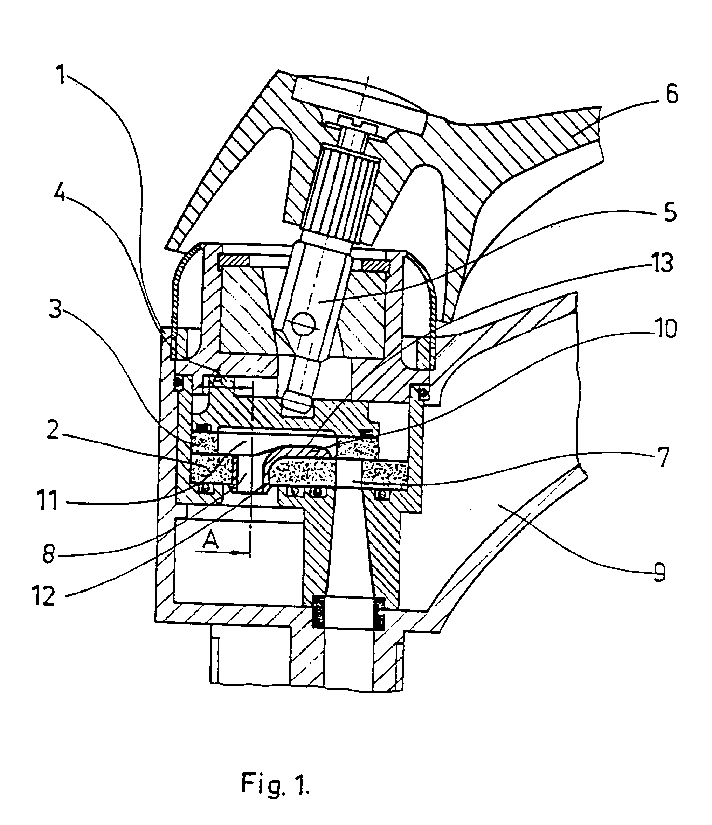

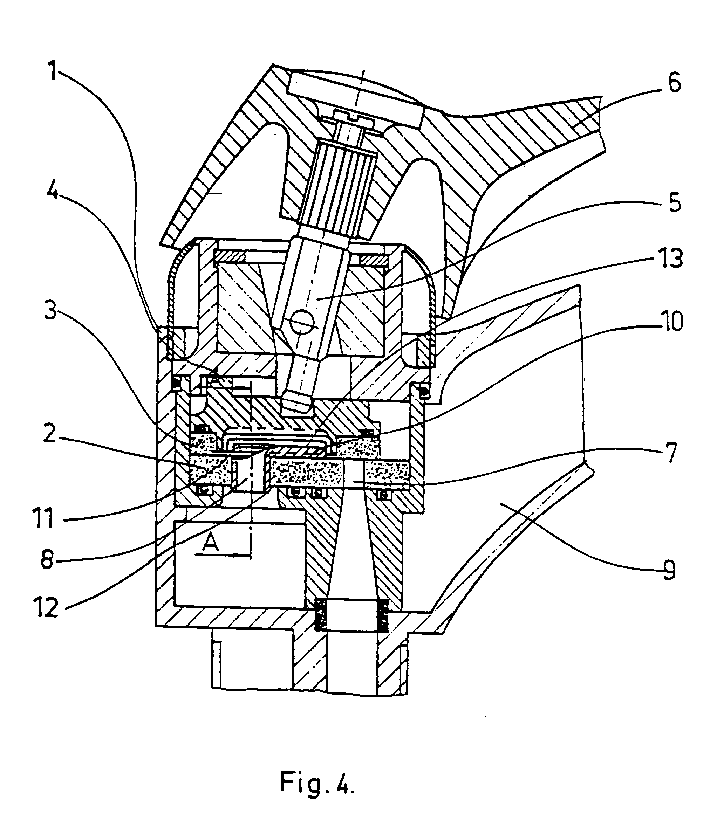

The mixing ratio and the total water flow are controlled by the action of a movable ceramic disk 3, to which is tightly joined a plastics piece 4 which together with said ceramic disk 3 forms a space 11 for flow and mixing of the water in a manner known per se. The disk assembly 3, 4 is moved by a swivelling spindle 5 to which is attached the actual control lever 6. The mixed water discharged from the outlet aperture 8 finally reaches the outlet nozzle 9, which is shown only partially in Figures 1 and 4.

In order to achieve a noise reduction in the flow space 11 it has been earlier known for curved guide surfaces, parallel fins or such like to be arranged on the plastics piece 4, i.e. in the upper part of the mixing space 11. According to the present invention the noise reduction is further improved by arranging a smooth guide surface also in the lower part of the mixing space on the side of the inside curve of the flowing water. This has been achieved in the embodiments according to the figures by fitting a piece 10, which is most suitably made of plastics, in close conjunction with the disk 2 so that said piece 10 forms a smoothly curving guide surface 13 between the inlet apertures 7 and the outlet aperture 8.

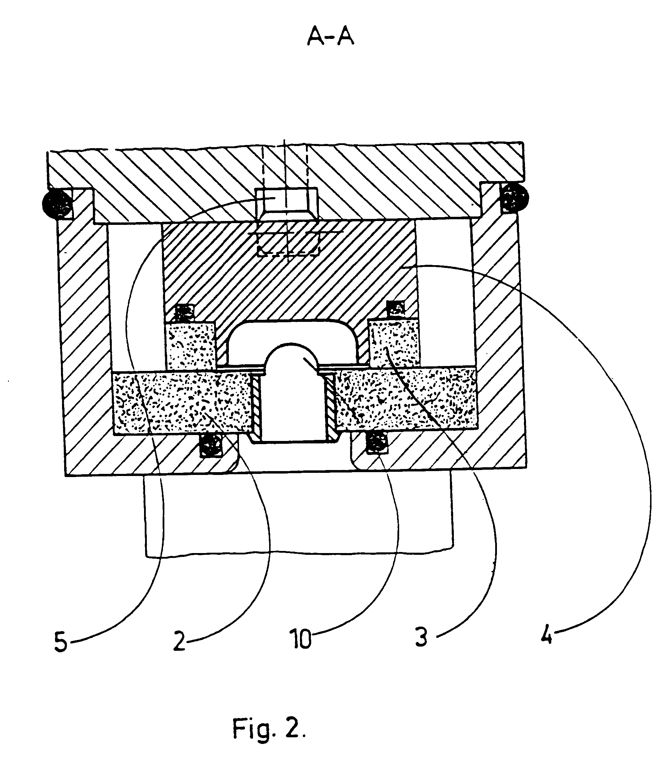

In one embodiment (Figures 1 - 5) the guide piece 10 is attached to the fixed disk 2 by furnishing said guide piece with a projection 12 formed as a bushing which tightly fits the outlet aperture 8 in ceramic disk 2. If the projection 12 is further furnished with a widened section at its bottom end as in the figures, then attachment can be achieved simply by means of fastening due to the elasticity of the bushing 12.

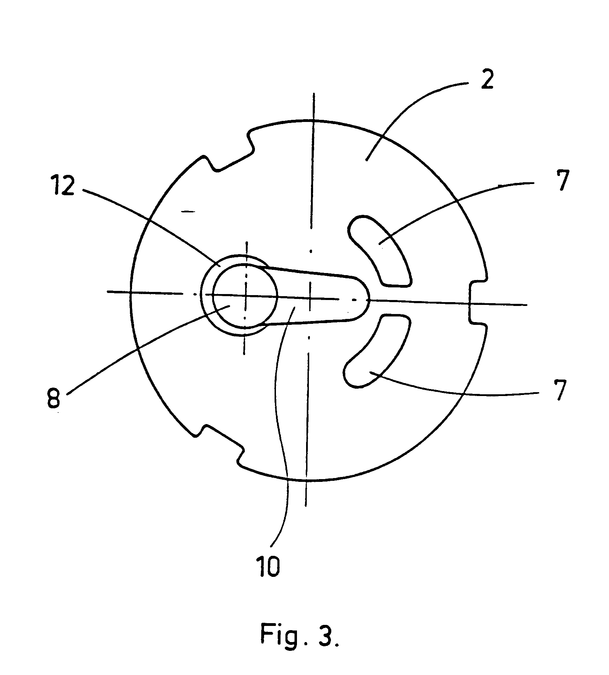

In Figure 3 one possible form of the guide piece 10 is shown as seen from above. The guide piece 10 must end slightly before the inlet apertures 7, so that the edge of the movable ceramic disk 3 may close the inlet channels 7 completely when the valve is in the closed position. The free interval between the edge of the guide piece 10 and the edge of the inlet aperture 7 may be e.g. 0.5 - 1,5 mm.

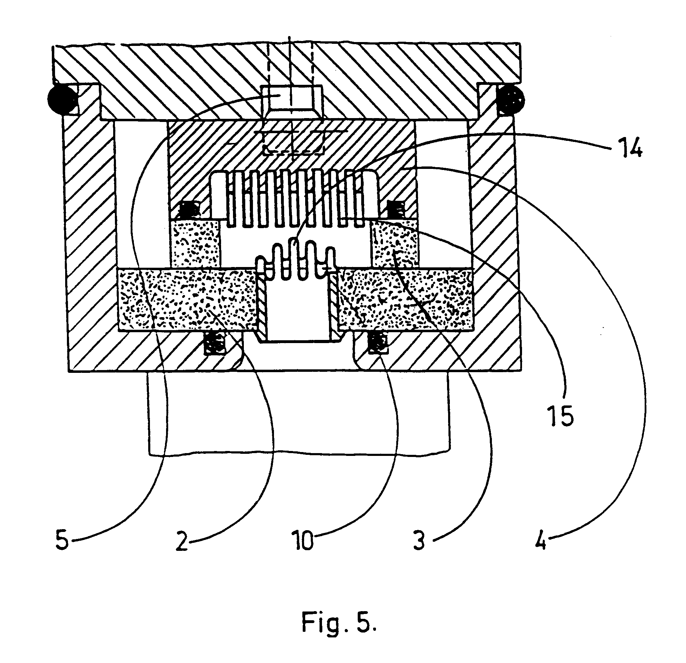

In Figures 4 and 5 a slightly modified embodiment is shown, in which the guide surface of the guide piece 10 is furnished with fins 14 extending essentially in the direction of flow of the water. Corresponding fins are also formed on the plastics piece 4, i.e. on the outside curve of the flow channel. The height of said fins may vary arbitrarily, and the fins may extend quite close to each other. The fins 14 may also be curved e.g. diverging from the outlet aperture in fan-like fashion towards both inlet apertures 7.

It is further possible to fit the bushing 12 to the outlet aperture 8 so loosely that the guide piece 10 is able to turn as the movable disk and the plastics piece 4 turn. In this case the fins 14 and correspondingly 15 may extend even so as to be partially interleaved.

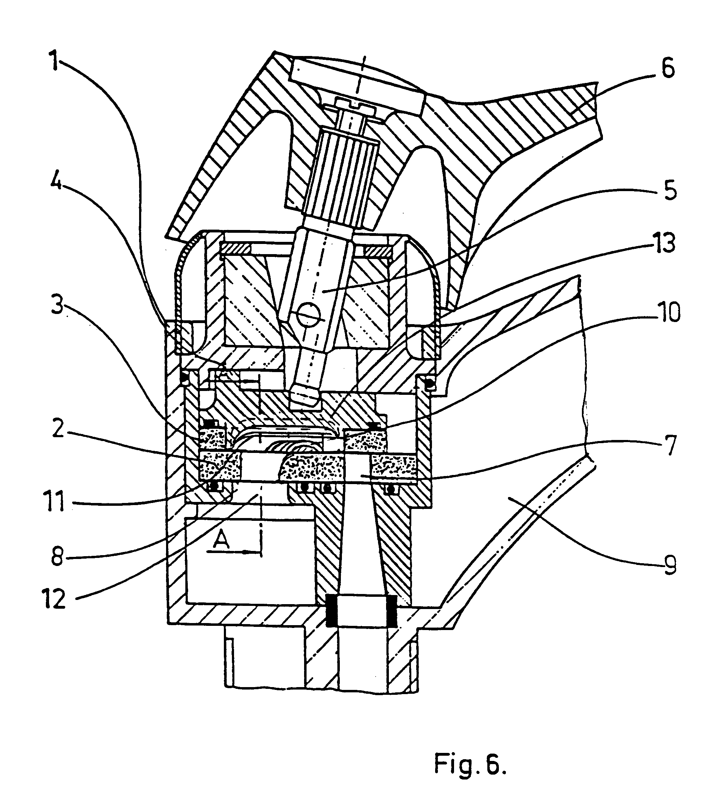

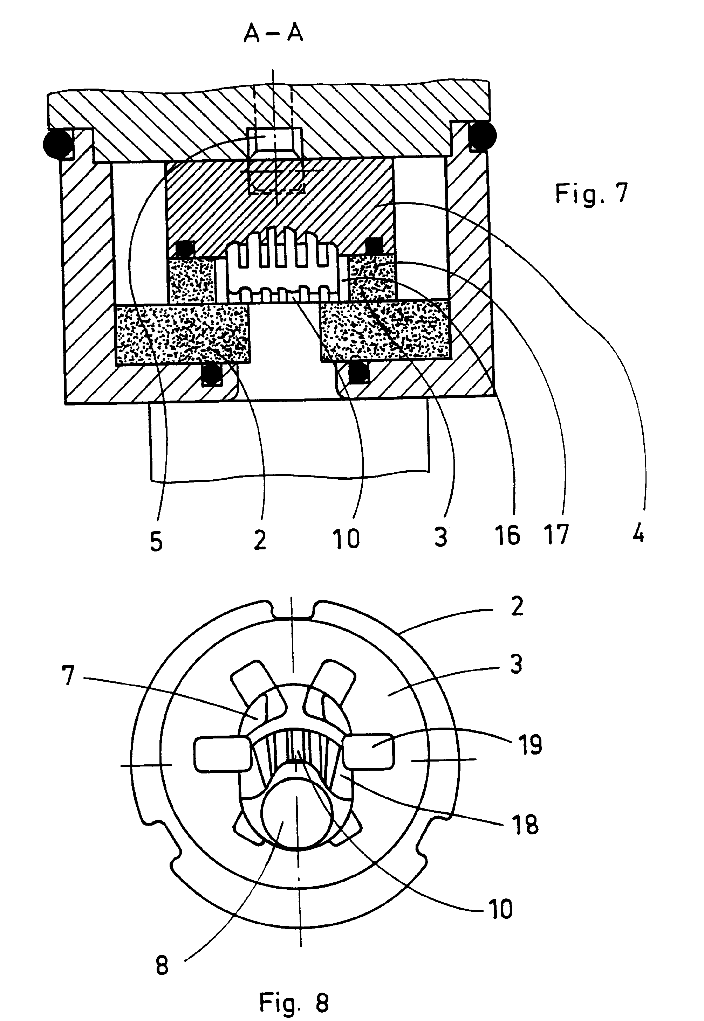

In Figures 6 - 8 another embodiment is shown, in which the guide piece 10 is attached to the movable disk 3. Attachment can be made e.g. by means of projections 16 on the sides of the guide piece extending along the sides of the mixing space, the ends 17 of said projections engaging in corresponding grooves 19 in the movable disk 3. There is a plurality (Figure 8) of these grooves in the movable disk, and corresponding projections on the plastics piece 4 engage in said grooves so that parts 3 and 4 move together. In this case piece 10 in its entirety is gum-shaped and shape of its central part follows the shape of the apertures 7 and 8. It is essential that the bottom surface of the piece 10 moves relatively tightly along the top surface of the fixed disk 2. As in the preceding embodiment parts 10 and 4 can be furnished with water guide fins in a manner known per se.

**Claims**

1. A noise-reduced mixing valve comprising a valve body (1) and, located in the control part within said body, a fixed ceramic disk (2) penetrated by inlet apertures (7) for hot and cold water and moreover penetrated by an outlet aperture (8) for the mixed water, and further a movable ceramic disk (3) in which there is an aperture acting together with said apertures in the fixed disk (2) to control the flows of hot and cold water and which movable disk (3) either alone or together with a plastics piece (4) joined to it forms a mixing space (11) for the water between itself and said fixed ceramic disk (2), the water flow curving through said mixing space (11) from the inlet apertures (7) to the outlet aperture (8), and flow guide means (10) being disposed in said mixing space, **characterized** in that said flow guide means comprises a flow guide piece (10) positioned in close conjunction with the top surface of the fixed disk (2) so that the part of said guide piece (10) facing the mixing space forms a curved guide surface (13) at the inner curve side of the water flow between the inlet apertures (7) and the outlet aperture (8).

2. A mixing valve according to Claim 1, **characterized** in that the flow guide piece (10) is attached to the fixed disk (2) by means of a projection (12) extending into the outlet aperture (8).

3. A mixing valve according to Claim 2, **characterized** in that said projection (12) is formed as a bushing and attached to the outlet aperture (8) by a snap fastening.

4. A mixing valve according to Claim 2, **characterized** in that the curved guide surface (13) joins the inside surface of the projection (12) smoothly.

5. A mixing valve according to any of preceding claims, **characterized** in that the projection (12) of the flow guide piece (10) is fitted to the outlet aperture (8) in such a manner as to permit said guide piece (10) to turn under the influence of the motion of the movable disk (3) with the projection (12) acting as a pivot.

6. A mixing valve according to Claim 1, **characterized** in that the flow guide piece (10) is attached to the movable disk (3) or to the plastics piece (4) attached to said movable disk.

7. A mixing valve according to Claim 6, **characterized** in that the flow guide,piece (10) is attached by two projections extending along the sides of the mixing space (11) to recesses formed between the movable disk (3) and plastics piece (4), whereupon the central part of the gum-shaped guide piece (10) forms the requisite curve guide surface (13).

8. A mixing valve according to Claim 7, **characterized** in that said central part on its lower surface is plane and coincident with the top surface of the fixed disk (2).

9. A mixing valve according to any of the preceding claims, **characterized** in that the curved guiding surface (13) is furnished with fins essentially in the direction of flow.

10. A mixing valve according to Claim 9, **characterized** in that the upper part of the mixing space (11) is also furnished in a manner known per se with fins in the direction of flow.

**Patentansprüche**

1. Geräuschreduziertes Mischventil mit einem Ventilgehäuse (1) und einer im Regelteil innerhalb des Körpers befindlichen, festen Keramikscheibe (2), die von Einlaßöffnungen (7) für heißes und kaltes Wasser und darüber hinaus von einer Auslaßöffnung (8) für Mischwasser durchdrungen ist, sowie ferner mit einer bewegbaren Keramikscheibe (3), in der sich eine Öffnung befindet, die mit den Öffnungen in der festen Scheibe (2) zusammenwirkt, um die Ströme von heißem und kaltem Wasser zu regeln, wobei die bewegbare Scheibe (3) entweder allein oder zusammen mit einem mit ihr verbundenen Kunststoffstück (4) einen Mischraum (11) für das Wasser zwischen ihr und der festen Keramikscheibe (2) bildet, durch den der Wasserstrom von den Einlaßöffnungen (7) zur Auslaßöffnung (8) verläuft, und mit Strömungsführmitteln (10), die sich in dem Mischraum befinden, **dadurch gekennzeichnet**, daß die Strömungsführmittel ein Strömungsführstück (10) aufweisen, das sich in enger Nachbarschaft mit der oberen Fläche der festen Scheibe (2) befindet, so daß der Teil des Führstückes (10), der dem Mischraum zugewandt ist, an der inneren gekrümmten Seite des Wasserstroms zwischen den Einlaßöffnungen (7) und der Auslaßöffnung (8) eine gekrümmte Führfläche (13) bildet.

2. Mischventil nach Anspruch 1, **dadurch gekennzeichnet**, daß das Strömungsführstück (10) mittels eines Vorsprungs (12), der sich in die Auslaßöffnung (8) erstreckt, an der festen Scheibe (12) angebracht ist.

3. Mischventil nach Anspruch 2, **dadurch gekennzeichnet**, daß der Vorsprung (12) als Buchse ausgebildet und an der Auslaßöffnung (8) mittels einer Schnappbefestigung angebracht ist.

4. Mischventil nach Anspruch 2, **dadurch gekennzeichnet**, daß die gekrümmte Führfläche (13) glatt in die Innenfläche des Vorsprungs (12) übergeht.

5. Mischventil nach einem der vorhergehenden Ansprüche, **dadurch gekennzeichnet**, daß der Vorsprung (12) des Strömungsführstückes (10) derart an der Auslaßöffnung (8) angebracht ist, daß das Führstück (10) unter dem Einfluß der Bewegung der bewegbaren Scheibe (3) gedreht werden kann, wobei der Vorsprung (12) als Schwenkachse dient.

6. Mischventil nach Anspruch 1, **dadurch gekennzeichnet**, daß das Strömungsführstück (10) an der bewegbaren Scheibe (3) oder an dem an der bewegbaren Scheibe angebrachten Kunststoffstück (4) angebracht ist.

7. Mischventil nach Anspruch 6, **dadurch gekennzeichnet**, daß das Strömungsführstück (6) mittels zweier Vorsprünge (16), die sich entlang den Seiten des Mischraums (11) zu Aussparungen zwischen der bewegbaren Scheibe (3) und dem Kunststoffstück (4) erstrecken, angebracht ist, wobei der Mittelbereich des zahnfleischförmigen Führstückes (10) die erforderliche gekrümmte Führfläche (13) bildet.

8. Mischventil nach Anspruch 7, **dadurch gekennzeichnet**, daß der Mittelbereich an seiner unteren Fläche eben ist und mit der oberen Fläche der festen Scheibe (2) zusammenfällt.

9. Mischventil nach einem der vorhergehenden Ansprüche, **dadurch gekennzeichnet**, daß die gekrümmte Führfläche (13) mit im wesentlichen in Strömungsrichtung verlaufenden Rippen versehen ist.

10. Mischventil nach Anspruch 9, **dadurch gekenzeichnet**, da der obere Teil des Mischraums (11) in an sich bekannter Weise mit in Strömungsrichtung verlaufenden Rippen versehen ist.

**Revendications**

1. Mitigeur à niveau de bruit réduit comprenant un corps de mitigeur (1) et, dans la partie de commande à l'intérieur dudit corps, un disque céramique fixe (2) traversé par des ouvertures d'entrée (7) pour l'eau chaude et l'eau froide et traversé en outre par une ouverture de sortie (8) pour l'eau mélangée, et un disque céramique mobile (3) dans lequel est formée une ouverture qui coopère avec lesdites ouvertures du disque fixe (2) pour commander les débits d'eau chaude et d'eau froide, lequel disque mobile (3) forme, soit seul, soit en combinaison avec une pièce de matière plastique (4) qui lui est réunie, un espace de mélange (11) pour l'eau entre lui-même et ledit disque céramique fixe (2), le courant d'eau s'incurvant à travers ledit espace de mélange (11), en allant des ouvertures d'entrée (7) à l'ouverture de sortie (8), et des moyens (10) de guidage de l'écoulement étant disposés dans ledit espace de mélange, caractérisé en ce que lesdits moyens de guidage de l'écoulement comprennent une pièce (10) de guidage de l'écoulement positionnée tout contre la surface supérieure du disque fixe (2) de manière que la partie de ladite pièce de guidage (10) qui regarde vers l'espace de mélange forme une surface de guidage incurvée (13) sur le côté de la courbe intérieure du courant d'eau entre les ouvertures d'entrée (7) et l'ouverture de sortie (8).

2. Mitigeur selon la revendication 1, caractérisé en ce que la pièce (10) de guidage de l'écoulement est fixée au disque fixe (2) au moyen d'une saillie (12) qui pénètre dans l'ouverture de sortie (8).

3. Mitigeur selon la revendication 2, caractérisé en ce que ladite saillie (12) forme une fourrure et est fixée à l'ouverture de sortie (8) par une fixation à encliquetage.

4. Mitigeur selon la revendication 2, caractérisé en ce que la surface de guidage incurvée (13) se raccorde à la surface intérieure de la saillie (12) par une transition douce.

5. Mitigeur selon l'une quelconque des revendications précédentes, caractérisé en ce que la saillie (12) de la pièce (10) de guidage de l'écoulement est ajustée dans l'ouverture de sortie (8) de manière à permettre à ladite pièce de guidage (10) de tourner sous l'influence du mouvement du disque fixe (3), la saillie (12) jouant le rôle de pivot.

6. Mitigeur selon la revendication 1, caractérisé en ce que la pièce (10) de guidage de l'écoulement est fixée au disque mobile (3) ou à la pièce de matière plastique (4) fixée audit disque mobile.

7. Mitigeur selon la revendication 6, caractérisé en ce que la pièce (10) de guidage de l'écoulement est fixée par deux saillie (16) qui s'étendent le long des côtés de l'espace de mélange (11) vers des évidements formés entre le disque mobile (3) et la pièce de matière plastique (4), à la suite de quoi la partie centrale de la pièce de guidage (10) en forme de gencive forme la surface de guidage incurvée (13) voulue.

8. Mitigeur selon la revendication 7, caractérisé en ce que, sur sa surface inférieur, ladite partie centrale est plane et en coïncidence avec la surface supérieure du disque fixe (2).

9. Mitigeur selon une quelconque des revendications précédentes, caractérisé en ce que la surface de guidage incurvée (13) est munie d'ailettes orientées sensiblement dans la direction de l'écoulement.

10. Mitigeur selon la revendication 9, caractérisé en ce que la partie supérieure de l'espace de mélange (11) est elle aussi munie d'une façon connue en soi d'ailettes orientées dans le sens de l'écoulement.

Fig. 1.

A-A

5          2          10          3          4

Fig. 2.

Fig. 3.

Fig. 4.

Fig. 5.

Fig. 6.

A – A

Fig. 7

5     2     10     3     16   17    4

2

3

7

19

18

8

10

Fig. 8